# EUROPÄISCHE PATENTSCHRIFT

(11) **EP 2 586 078 B1**
(45) Veröffentlichungstag und Bekanntmachung des Hinweises auf die Patenterteilung: **19.03.2014**
(21) Anmeldenummer: 11705424.7
(22) Anmeldetag: 28.01.2011
(51) Int. Cl.: H01M 2/02, H01M 2/16, H01M 6/12

(54) **GALVANISCHE ZELLE**
GALVANIC CELL
CELLULE GALVANIQUE

(30) Priorität: 03.02.2010 AT 1392010
(43) Veröffentlichungstag der Anmeldung: 01.05.2013
(73) Patentinhaber: Universität Linz, 4040 Linz (AT)
(72) Erfinder: KOTSIS, Gabriele, A-4040 Linz (AT); BAUER, Siegfried, A-4040 Linz (AT); SCHWÖDIAUER, Reinhard, A-4040 Linz (AT); SIKET, Christian, A-4502 St. Marien (AT); KALTENBRUNNER, Martin, A-4040 Linz (AT); KETTLGRUBER, Gerald, A-4040 Linz (AT)
(74) Vertreter: Hübscher, Helmut
(86) Internationale Anmeldenummer: PCT/AT2011/000046
(87) Internationale Veröffentlichungsnummer: WO 2011/094779

(56) Entgegenhaltungen:
- WO-A2-2010/009469
- GB-A- 398 630
- JP-A- 59 117 069

## Beschreibung

### Technisches Gebiet

Die Erfindung bezieht sich auf eine galvanische Zelle mit einer Anodenschicht, mit einer Kathodenschicht und mit einer die Anoden- und die Kathodenschicht verbindenden Elektrolytschicht.

### Stand der Technik

Um flexible Batterien vorzusehen, ist es bekannt (EP 1 033 766 B1), in einem flexiblen Gehäuse eine Mehrzahl von laminatartig aufgebauten Schichten vorzusehen, die abwechselnd durch eine polymere Elektrolytschicht voneinander getrennte Anoden und Kathoden bilden. Aus der JP 5 59 117 069 ist eine flexible Batterie bekannt, in welcher mehrere elastische Körper in die Elektrodenschicht der Anode bzw. der Kathode eingearbeitet sind. Eine Beschädigung der Batterie bei Biegung kann so vermieden werden. Die jeweils durch eine Kathode und eine Anode mit dazwischenliegender Elastomerschicht gebildeten galvanischen Zellen dieser bekannten Batterien erlauben zwar ein Biegen der filmartigen, elektrochemisch wirksamen Lagen, nicht aber eine Dehnung dieser Zellen in einem Ausmaß, wie es für die Energieversorgung bekannter dehnbarer elektronischer Schaltkreise erforderlich wird, um eine Anpassung beispielsweise an mögliche Bewegungen der diese Schaltkreise aufnehmenden Träger ohne Gefährdung der Energieversorgung der jeweiligen Schaltkreise zu ermöglichen.

### Darstellung der Erfindung

Der Erfindung liegt somit die Aufgabe zugrunde, eine galvanische Zelle der eingangs geschilderten Art so auszugestalten, dass nicht nur eine Biegung, sondern auch eine Dehnung der Zelle parallel zu den elektrochemisch wirksamen Schichten möglich wird, ohne eine ausreichende Energieabgabe zu gefährden.

Die Erfindung löst die gestellte Aufgabe dadurch, dass die mit Abstand nebeneinander angeordneten, durch ein elektrisch nichtleitendes Elastomer voneinander getrennten, pasten- oder gelartigen Schichten für die Anode und die Kathode durch die das nichtleitende Elastomer überbrückende, pasten- oder gelartige Elektrolytschicht abgedeckt und zusammen mit der Elektrolytschicht in einer elastomeren Hülle eingebettet sind.

Durch die pasten- oder gelartige Konsistenz der einzelnen elektrochemisch wirksamen Schichten wird zunächst in einfacher Weise sichergestellt, dass bei einer Dehnung der galvanischen Zelle parallel zu den einzelnen Schichten diese Schichten die Dehnbewegung mitmachen, ohne ihre Funktion zu gefährden. Aufgrund der Anordnung der Kathoden- und Anodenschicht mit Abstand nebeneinander und die zusätzliche Trennung dieser Schichten für die Anode und Kathode durch ein elektrisch nichtleitendes Elastomer wird die Gefahr gebannt, dass diese Schichten außer über die Elektrolytschicht miteinander in eine elektrochemisch wirksame Verbindung treten können, wie dies bei galvanischen Zellen mit übereinanderliegenden Kathoden- und Anodenschichten der Fall sein kann, wenn aufgrund der Dehnung die Elektrolytschicht zwischen den Kathoden- und Anodenschichten unterbrochen wird. Die pasten- oder gelartige Elektrolytschicht überbrückt die nichtleitende elastomere Trennschicht zwischen den beiden Schichten für die Anode und die Kathode, sodass auch im Zwischenbereich zwischen der Anode und der Kathode mechanische Eigenschaften sichergestellt sind, die ein Mitgehen dieses isolierenden Zwischenbereichs mit äußeren Dehnungen erlauben, die die elastomere Hülle beaufschlagen, in der die elektrochemisch wirksamen Schichten eingebettet sind.

Um das Dehnverhalten der Anode und der Kathode der galvanischen Zelle in einfacher Weise im Bereich der elektrischen Anschlusselektroden berücksichtigen zu können, können die Anoden- und Kathodenschichten auf je einer pasten- oder gelartigen Kohlenstoffschicht als Anschlusselektroden aufgebracht werden. Die Anschlusselektroden weisen daher hinsichtlich des Dehnungsverhaltens mit dem Dehnungsverhalten der Anode bzw. Kathode vergleichbare mechanische Eigenschaften auf.

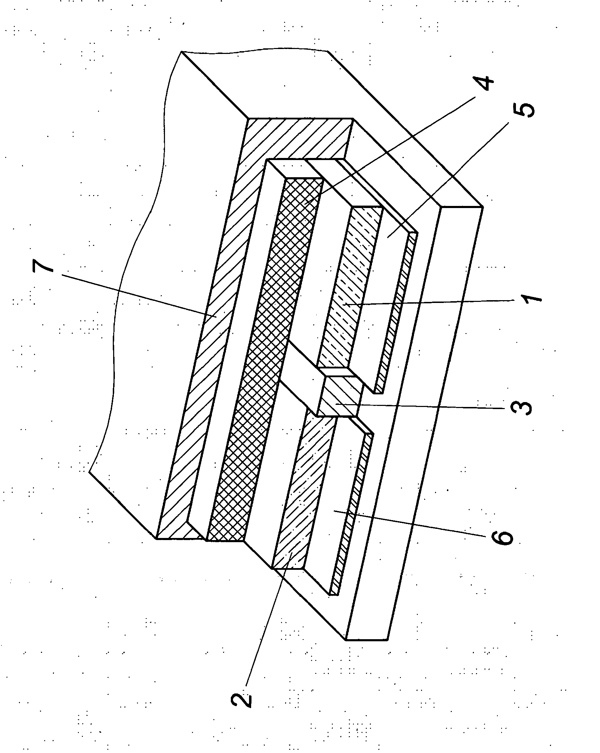

### Kurze Beschreibung der Zeichnung

In der Zeichnung ist der Erfindungsgegenstand beispielsweise dargestellt, und zwar wird eine erfindungsgemäße galvanische Zelle in einem zum Teil aufgerissenen Schaubild gezeigt.

### Weg zur Ausführung der Erfindung

Die dargestellte galvanische Zelle weist eine pasten- oder gelartige Anodenschicht 1 und eine mit Abstand von dieser Anodenschicht 1 neben dieser angeordnete Kathodenschicht 2 auf, die ebenfalls eine pasten- bzw. gelartige Konsistenz besitzt. Zwischen den beiden Schichten 1, 2 für die Anode und die Kathode ist ein elektrisch nicht leitendes Elastomer 3 vorgesehen. Die Anodenschicht 1 und die Kathodenschicht 2 werden unter einer Überbrückung des nicht leitenden Elastomers 3 von einer pasten- oder gelartigen Elektrolytschicht 4 abgedeckt. Die Anschlusselektroden 5 und 6 für die Anodenschicht 1 und die Kathodenschicht 2 werden durch pasten- oder gelartige Kohlenstoffschichten gebildet, um hinsichtlich der mechanischen Eigenschaften mit den Anodenund Kathodenschichten 1, 2 vergleichbare mechanische Eigenschaften zu gewährleisten. Die elektrochemisch wirksamen Schichten der galvanischen Zelle sind in einer elastomeren Hülle 7 eingebettet, die parallel zu den elektrochemisch wirksamen Schichten auftretenden Kräften ausgesetzt werden kann und diesen Kräften entsprechend gedehnt wird. Diese Dehnung der elastomeren Hülle 7 bewirkt eine entsprechende Längung der elektrochemisch wirksamen Schichten aufgrund deren pasten- bzw. gelartigen Konsistenz, wobei jedoch die Funktion der galvanischen Zelle nicht beeinträchtigt wird. Insbesondere wird das Zusammenwirken der Elektrolytschicht 4 mit den Anoden- und Kathodenschichten 1, 2 nicht beeinträchtigt, weil die Anodenschicht 1 und die Kathodenschicht 2 durch das nichtleitende Elastomer 3 auch bei hohen Dehnungen, beispielsweise auf die doppelte Ausgangslänge und darüber hinaus, voneinander getrennt bleiben und nur über die das nichtleitende Elastomer 3 überbrückende Elektrolytschicht 4 in Verbindung stehen.

Die erfindungsgemäße galvanische Zelle kann vorteilhaft als Zink-Braunstein-Zelle ausgebildet sein. In diesem Fall setzt sich die Anodenschicht 1 beispielsweise aus einer Mangandioxid, Kohlenstoff und einen Elektrolyt (NH₄Cl, ZnCl₂) enthaltenden Paste zusammen, während die Kathodenschicht 2 ein Gel aus Zink, Kohlenstoff und Xanthan aufweist. Die Elektrolytschicht 4 kann ein Elekrolytgel mit Xanthan als Geliermittel sein. Die Anschlusselektroden 5 und 6 bilden eine Paste aus Kohlenstoff und einem Silikonöl. Als elastomere Hülle 7 kann beispielsweise ein Acryl eingesetzt werden. Gemäß dem dargestellten Ausführungsbeispiel kann die Anodenschicht 1 und die Kathodenschicht 2 jeweils eine Grundfläche von z.B. einem 1 cm² bei einer Gesamtdicke der Zelle von 2 mm aufweisen.

Galvanische Zellen gemäß der Erfindung sind jedoch nicht auf eine solche Zusammensetzung beschränkt. Wesentliche Voraussetzung ist allerdings stets, dass die elektrochemisch wirksamen Komponenten sich als Pasten oder Gele herstellen lassen. Anstelle von Zink-Braunstein-Zellen lassen sich beispielsweise dehnbare Alkali-Mangan-Zellen einsetzen. In diesem Fall ist der saure Elektrolyt, der bei den Zink-Braunstein-Zellen zum Einsatz kommt, durch einen basischen Elektrolyten (beispielsweise eine wässrige Lösung von 40 Gew.% KOH und 4 Gew.% ZnCl₂) zu ersetzen.

Es sind aber auch Zink-Luft-Zellen möglich, wobei im einfachsten Fall die Alkali-Mangan-Zellen dadurch erweitert werden, dass die das Mangandioxid enthaltende Paste der Anodenschicht durch eine geeignete Perforation des Elastomers luftdurchlässig gestaltet wird. Die Perforation hat dabei so zu erfolgen, dass das Elastomer für Sauerstoff nicht aber für das Kathodengel durchlässig wird.

Selbstverständlich sind auch andere Elektrolyte, beispielsweise leitfähige Polymergele u. dgl. möglich. Entscheidend ist für jede Ausführungsform einer galvanischen Zelle, dass die Anode und die Kathode nebeneinander angeordnet und voneinander durch ein nichtleitendes Elastomer getrennt sind, wobei der Elektrolyt die Anode und die Kathode unter Überbrückung des nichtleitenden Elastomers abdeckt.

## Patentansprüche

1. Galvanische Zelle mit einer Anodenschicht (1), mit einer Kathodenschicht (2) und mit einer die Anoden- und die Kathodenschicht (1, 2) verbindenden Elektrolytschicht (4), **dadurch gekennzeichnet, dass** die mit Abstand nebeneinander angeordneten, durch ein elektrisch nichtleitendes Elastomer (3) voneinander getrennten, pasten- oder gelartigen Schichten (1, 2) für die Anode und die Kathode durch die das nichtleitende Elastomer (3) überbrückende, pasten- oder gelartige Elektrolytschicht (4) abgedeckt und zusammen mit der Elektrolytschicht (4) in einer elastomeren Hülle (7) eingebettet sind.

2. Galvanische Zelle nach Anspruch 1, **dadurch gekennzeichnet, dass** die Anoden- und Kathodenschichten (1, 2) auf je einer pasten- oder gelartigen Kohlenstoffschicht als Anschlusselektroden (5, 6) aufgebracht sind.

## Claims

1. Galvanic cell, having an anode layer (1), having a cathode layer (2) and having an electrolyte layer (4) which connects the anode and cathode layers (1, 2), **characterised in that** the paste-like or gel-like layers (1, 2) for the anode and the cathode, which layers are arranged next to one another at a spaced interval and are separated from one another by an electrically non-conducting elastomer (3), are covered by the paste-like or gel-like electrolyte layer (4) bridging the non-conducting elastomer (3) and are embedded together with the electrolyte layer (4) in an elastomeric jacket (7).

2. Galvanic cell as claimed in claim 1, **characterised in that** the anode and cathode layers (1, 2) are applied to a paste-like or gel-like carbon layer each as connecting electrodes (5, 6).

## Revendications

1. Cellule galvanique avec une couche anodique (1), avec une couche cathodique (2) et avec une couche d'électrolyte (4) reliant les couches anodique et cathodique (1, 2), **caractérisée en ce que** les couches (1, 2), pour l'anode et la cathode, de type gel ou pâte, séparées l'une de l'autre par un élastomère (3) non électroconducteur, disposées l'une à côté de l'autre avec un espace, , sont recouvertes par une couche d'électrolyte (4) de type gel ou pâte, chevauchant l'élastomère (3) non conducteur et sont incorporées conjointement avec la couche d'électrolyte (4) dans une enveloppe (7) élastomère.

2. Cellule galvanique selon la revendication 1, **caractérisée en ce que** les couches anodique et cathodique (1, 2) sont appliquées sur une couche de carbone de type gel ou pâte, en tant qu'électrodes de raccordement (5, 6).
